# EUROPÄISCHE PATENTANMELDUNG

(11) **EP 4 080 385 A1**
(43) Veröffentlichungstag der Anmeldung: **26.10.2022**
(21) Anmeldenummer: 21169643.0
(22) Anmeldetag: 21.04.2021
(51) Int. Cl.: G06F 21/10

(54) **ERMITTELN EINER GÜLTIGKEIT EINER NUTZUNGSBERECHTIGUNG EINES COMPUTERIMPLEMENTIERTEN PRODUKTS**

(71) Anmelder: Siemens Aktiengesellschaft, 80333 München (DE)
(72) Erfinder: Aschauer, Hans, 81829 München (DE); Falk, Rainer, 85586 Poing (DE); Feist, Christian Peter, 80689 München (DE); Zwanzger, Johannes, 85579 Neubiberg (DE)

(57) **Zusammenfassung**

Die Erfindung betrifft ein Verfahren zum Ermitteln einer Gültigkeit einer Nutzungsberechtigung eines computerimplementierten Produkts auf einem Gerät. Das Verfahren ist charakterisiert dadurch, dass das Gerät eine Komponente aufweist, eine Variable der Komponente von einem Nutzungsumfang der Komponente monoton abhängt, die Variable gegen Manipulation geschützt ist, die Komponente für eine erste Funktion ausgebildet ist, die erste Funktion eine operative Durchführung des Betriebs des Geräts ist und die Komponente zusätzlich für eine zweite Funktion, welche das Ermitteln der Gültigkeit ist, herangezogen wird.

Das Verfahren weist die folgenden Schritte auf:
- Ermitteln eines ersten Werts der Variablen zu einem ersten Zeitpunkt,
- Ermitteln eines Gültigkeitswerts, wobei in den Gültigkeitswert der erste Wert einfließt oder diesem entspricht,
- Ermitteln eines zweiten Wertes der Variable zu einem zweiten Zeitpunkt, wobei der zweite Zeitpunkt nach dem ersten Zeitpunkt liegt, und
- Ermitteln der Gültigkeit der Nutzungsberechtigung basierend auf dem zweiten Wert in Relation zu dem Gültigkeitswert.

## Beschreibung

### Hintergrund der Erfindung

### Gebiet der Erfindung

Die vorliegende Erfindung betrifft ein Verfahren zum Ermitteln einer Gültigkeit einer Nutzungsberechtigung eines computerimplementierten Produkts. Die Erfindung betrifft außerdem ein zugehöriges Computerprogrammprodukt und computerlesbares Medium.

### Beschreibung des Stands der Technik

Das Geschäftsmodell für viele computerimplementierte Produkte, insbesondere Software, Inhalte, Lösungen und Services, besteht darin, einem Kunden deren Nutzung gegen ein bestimmtes Entgelt im Rahmen einer Lizenz nur für einen bestimmten Zeitraum bzw. nur für eine begrenzte Anzahl von Vorgängen zu erlauben (beides im Folgenden als "zeitliche Beschränkungen" referenziert).

Dies betrifft insbesondere Bereiche wie Software-Anwendungen für IT-Geräte, Additive Manufacturing, DRM-Management oder Car Sharing. Zur Durchsetzung der zeitlichen Beschränkungen sind für den jeweiligen Anbieter rein juristische Mittel oft nicht ausreichend, weshalb zusätzlich technische Maßnahmen vorgesehen werden, die die vertragsgemäße Nutzung des Lizenzgegenstandes über den durch die Lizenz abgedeckten Bereich hinaus verhindern.

Allerdings sind solche technischen Vorkehrungen durch findige Anwender oft leicht zu umgehen, beispielsweise durch Zurücksetzen der Systemzeit oder bestimmter Nutzungszähler im Dateisystem eines Gerätes.

Eine schützende technische Maßnahme ist die Bindung von Lizenzen an statische Eigenschaften einer Hardware eines Gerätes oder einer Komponente, auf welcher das computerimplementierte Produkt läuft, insbesondere eine Bindung an IDs/Seriennummern von Hardware-Komponenten wie Prozessoren, Peripheriegeräten (MAC-Adresse, Festplatten) oder Volume-IDs von Festplattenpartitionen.

Weiterhin ist die Bindung von Lizenzen an speziell angebrachte, zusätzliche HW-Komponenten, insbesondere USB-Dongles, bekannt.

Bekannt ist außerdem, zur Begrenzung der Anzahl der Nutzungen eines Lizenzgegenstandes einen Nutzungszähler in einem nichtflüchtigen elektronischen Speicher des Lizenzgegenstands (beispielsweise einem speziellen File im Dateisystem) mitzuführen. Oft sind diese Speicher aber für einen Anwender logisch oder physikalisch zugänglich und daher leicht (über-)schreibbar (z.B. durch Überschreiben direkt innerhalb der Laufzeitumgebung des Lizenzgegenstandes oder durch das Mounten einer Festplatte in einem anderen Rechner, auf dem der Anwender volle Rechte besitzt).

Bekannt ist auch, die Prüfung der zeitlichen Gültigkeit von Lizenzen durch Vergleichen des Lizenzenddatums mit der Systemzeit vorzunehmen. Dies ist allerdings oft einfach durch das Zurücksetzen der Systemzeit auf einen Zeitpunkt vor Ablauf der Lizenz zu umgehen.

Ferner ist bekannt, Schritte zur Prüfung der Lizenz bzw. zusätzlich solche, die für eine sinnvolle Nutzung des Lizenzgegenstandes notwendig sind, auf einen Server im Internet auszulagern, der sich der Kontrolle und damit der Manipulation durch einen Anwender entzieht. Dieses Vorgehen setzt allerdings eine zumindest phasenweise Verbindung des Lizenzgegenstandes an das Internet voraus, die der Anwender unter Umständen nicht gewährleisten kann oder gezielt unterbindet.

Die Aufgabe der Erfindung besteht darin, eine verbesserte technische Lösung zur möglichst robusten Verhinderung von Betrug bei Lizenzen mit zeitlichen oder anwendungsbezogenen Beschränkungen bereitzustellen.

### Zusammenfassung der Erfindung

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ermitteln einer Gültigkeit einer Nutzungsberechtigung eines computerimplementierten Produkts auf einem Gerät. Das Verfahren ist charakterisiert dadurch, dass das Gerät eine Komponente aufweist, eine Variable der Komponente von einem Nutzungsumfang der Komponente monoton abhängt, die Variable gegen Manipulation geschützt ist, die Komponente für eine erste Funktion ausgebildet ist, die erste Funktion eine operative Durchführung des Betriebs des Geräts ist, und die Komponente zusätzlich für eine zweite Funktion, welche das Ermitteln der Gültigkeit ist, herangezogen wird.

Das Verfahren weist die folgenden Schritte auf:
- Ermitteln eines ersten Werts der Variablen zu einem ersten Zeitpunkt,
- Ermitteln eines Gültigkeitswerts, wobei in den Gültigkeitswert der erste Wert einfließt oder diesem entspricht,
- Ermitteln eines zweiten Wertes der Variable zu einem zweiten Zeitpunkt, wobei der zweite Zeitpunkt nach dem ersten Zeitpunkt liegt, und
- Ermitteln der Gültigkeit der Nutzungsberechtigung basierend auf dem zweiten Wert in Relation zu dem Gültigkeitswert.

Dass die Variable gegen Manipulation geschützt ist, bedeutet, dass ein Schutz vorhanden ist, welcher insbesondere einen Nutzer daran hindert, die Variable direkt zu verändern, insbesondere zurückzusetzen. Die Variable kann somit auch als irreversibel bezeichnet werden.

Dass die Komponente für eine erste Funktion ausgebildet ist und die erste Funktion eine operative Durchführung des Betriebs des Geräts ist, bedeutet, dass die Komponente nicht Bestandteil des Gerätes wurde, um eine sicherheitsrelevante Funktion auszuüben. Die Komponente wurde nicht Bestandteil des Gerätes, um die Gültigkeit der Nutzungsberechtigung des computerimplementierten Produkts auf dem Gerät zu ermitteln. Die Komponente ist für die operative Durchführung des Betriebs des Geräts zuständig, dazu gehört bei einem Speicher eines Prozessors insbesondere das Speichern von Daten.

Ein Aspekt der Erfindung besteht darin, die Gültigkeit einer Nutzungsberechtigung eines computerimplementierten Produkts durch eine Variable einer Komponente zu prüfen, wobei die Komponente von Grund auf Bestanteil des Gerätes, auf dem das computerimplementierte Produkt läuft, ist und wobei die Komponente nicht zu dem speziellen Zweck, die Gültigkeit der Nutzungsberechtigung des computerimplementierten Produkts zu prüfen, Bestandteil des Gerätes ist.

Die Überprüfung, ob eine Nutzungsberechtigung, insbesondere eine Security-Information, insbesondere eine Lizenz, ein kryptographischer Schlüssel oder ein digitales Zertifikat aktuell gültig sind, ist eine grundlegende Funktionalität. Dazu wird eine vertrauenswürdige Zeitinformation benötigt. Diese kann allgemein eine absolute Zeitinformation, insbesondere ein Datum und/oder eine Uhrzeit, oder eine relative Zeitinformation sein.

Nach bisherigem Stand der Technik benötigt eine vertrauenswürdige Zeitinformation jedoch spezielle Hardware-Komponenten, insbesondere Dongle, einen vertrauenswürdigen Online-Service und damit eine Internetverbindung oder einen vertrauenswürdigen Cloud-Service. Speziell wenn in geschlossenen industriellen Netzen offene Plattformen, wie insbesondere Industrie-PCs oder Compute-Blades für eine industrielle Edge-Computing-Infrastruktur, verwendet werden, kann der Fall auftreten, dass weder eine Netzwerkkonnektivität zu öffentlichen Netzen oder dem Internet noch spezielle Sicherheits-Hardware verfügbar ist. Es soll aber trotzdem eine Möglichkeit bereitgestellt werden, um zu erkennen, wenn eine Echtzeituhr auf unzulässige Weise zurückgesetzt wurde, z.B. um eine Lizenzprüfung zu überlisten, oder welche Zeitspanne seit Ausstellen oder erstmaliger Prüfung einer Lizenz vergangen ist.

Viele Komponenten eines computerbasierten Systems oder Gerätes, insbesondere Speicherbausteine und Speichermodule, erfassen einen Alterungswert. Dieser Alterungswert kann zwar nicht gezielt hochgesetzt werden, es handelt sich dabei jedoch um einen Parameter, der sich automatisch monoton ändert. Es wird deshalb vorgeschlagen, eine Zeitdauer/Nutzungsdauer abhängig von einem Alterungswert zumindest einer Komponente des computerbasierten Systems zu schätzen und diese Information für die Gültigkeitsprüfung einer Nutzungsberechtigung, insbesondere einer Security-Information, zu verwenden. Damit kann zwar keine exakte Gültigkeitsdauer für die Security-Information überprüft werden, es kann aber verhindert werden, dass die Security-Information zeitlich unbegrenzt als gültig akzeptiert wird. Dazu wird keine spezielle Security-Hardware wie Dongles oder spezielle Security-Chips benötigt, sondern es wird eine ohnehin vorhandene Alterungsinformation von einer oder mehreren Komponenten des computerbasierten Systems ausgewertet.

Es wird weiterhin vorgeschlagen, zeitlich und/oder hinsichtlich der Nutzungsanzahl beschränkte Lizenzen an eine Variable der Komponente, die von einem Nutzungsumfang der Komponente monoton abhängt, auch als monotoner Zähler bezeichenbar, zu binden. Die Variable ist nicht durch den Anwender manipulierbar oder aus Sicht des Anwenders irreversibel. Außerdem ist die Komponente bereits standardmäßig im Lizenzgegenstand bzw. in einer zu dessen Nutzung nötigen Vorrichtung (z.B. PC zum Ausführen von Software) vorhanden.

In einer weiteren Weiterbildung der Erfindung ist die Komponente somit nicht als ein spezielles Hardwaresicherheitsmodul, insbesondere nicht als Hardware-Dongle und nicht als Trusted Platform Modul, ausgebildet.

Der erste Wert, also der momentane Wert der Variable, insbesondere des monotonen Zählers, kann vor der Lizenzausstellung abgefragt werden. Der erste Wert wird entweder direkt in einen Gültigkeitswert umgerechnet und in dieser Form gespeichert. Der Gültigkeitswert kann insbesondere einen Wert angeben, welcher aussagt, wann die Nutzungsberechtigung nicht mehr gültig ist. Der Gültigkeitswert kann aber auch dem ersten Wert entsprechen und erst nach dem Ermitteln des zweiten Wertes umgerechnet werden. Vor dem Ermitteln der Gültigkeit kann der gespeicherte Gültigkeitswert abgerufen werden.

In einer weiteren Weiterbildung der Erfindung wird der Gültigkeitswert der Nutzungsberechtigung mit der Nutzungsberechtigung, insbesondere eine Lizenzbedingung, und/oder mit dem computerimplementierten Produkt gespeichert. Dies kann insbesondere erfolgen durch:
- ein vom Lizenzgeber authentisiertes Lizenzfile, welches die zulässigen Maximal- bzw. Minimalwerte der Variable oder des zweiten Wertes enthält, welche insbesondere durch eine bei Nutzung des computerimplementierten Produkts, insbesondere des Lizenzgegenstandes, ablaufende Software mit den aktuellen Zählerständen verglichen werden oder
- eine vom Lizenzgeber individuell vorgenommene Modifikation des computerimplementierten Produkts, insbesondere des Lizenzgegenstandes, insbesondere eine Modifikation wie ein Abändern von Konstanten in einer Software.

In einer Weiterbildung der Erfindung ist die Nutzungsberechtigung ausgebildet als:
- ein digitales Zertifikat,
- ein Lizenzzertifikat,
- eine Zugriffsberechtigung, insbesondere eine "Capability"
- ein kryptographischer Schlüssel und/oder
- eine Zugangsberechtigung.

In einer weiteren Weiterbildung der Erfindung ist das computerimplementierte Produkt ausgebildet als:
- computerbasierte Dienstleistung,
- Softwarelösung,
- Internetplattform,
- Cloudkapazität,
- Cloudumgebung,
- Containerlaufzeitumgebung und/oder
- lesbare Inhalte.

Eine Cloudkapazität oder Cloudumgebung kann sich ebenso auf eine Backend-Cloud beziehen wie auf eine Edge-Cloud oder auf eine Multi-Access Edge Computing Umgebung.

In einer weiteren Weiterbildung der Erfindung wird für das Ermitteln der Gültigkeit:
- eine formelbasierte Berechnung
- eine Berechnung einer Differenz des zweiten Wertes und des ersten Wertes,
- eine Ableitungskette,
- eine Hashkette und/oder
- ein künstliches neuronales Netz
einbezogen.

Für eine Schätzung der aktuellen Zeit, einer Zeitspanne oder einer Nutzungsdauer und damit für die Ermittlung der Gültigkeit basierend auf dem ersten Wert und dem zweiten Wert der Variable, insbesondere den ermittelten Alterungswerten der Komponenten, können unterschiedliche Verfahren verwendet werden, insbesondere eine formelbasierte Berechnung oder ein künstliches neuronales Netzwerk. Dadurch kann die Gültigkeit basierend auf einer Kombination von Alterungswerten einer Mehrzahl von Komponenten ermittelt werden.

In einer weiteren Variante werden die Werte der Variable, insbesondere des monotonen Zählers, nicht direkt zum Vergleich mit zulässigen Maximal- bzw. Minimalwerten in einem Lizenzfile herangezogen, sondern werden als Start- oder Endindizes in einer Ableitungskette interpretiert. Hierbei kann es sich insbesondere um eine Hashkette handeln, in welcher sich der (i+1)-te Ableitungswert hᵢ₊₁ durch Anwendung einer Hashfunktion H (ggf. unter zusätzlicher Einbeziehung eines kryptographischen Schlüssels k) auf den i-ten Ableitungswert hᵢ ergibt, vermöge hᵢ₊₁ = H(hᵢ) bzw. hᵢ₊₁ = Hₖ(hᵢ) . Entspricht beispielsweise der Wert einer monoton fallenden Variable, insbesondere eines monoton fallenden Zählers, dem maximalen Index m, bis zu dem eine Software die Werte einer solchen Kette berechnet, ist automatisch sichergestellt, dass die Software-Funktionen, die Schlüssel mit einem Index größer m benötigen würden, nicht mehr ausführen kann.

In einer weiteren Weiterbildung der Erfindung wird ein zu der Gültigkeit zugehöriges Konfidenzintervall ermittelt. Zusätzlich zur Schätzung der aktuellen Zeit, der Zeitspanne oder der Nutzungsdauer und damit für die Ermittlung der Gültigkeit kann somit weiterhin ein Konfidenzintervall geschätzt werden. Die Gültigkeit der Nutzungsberechtigung, insbesondere der Security-Information, wird basierend auf der geschätzten Zeitinformation ermittelt.

In einer weiteren Weiterbildung der Erfindung ist die Komponente als ein Speichermodul, ein elektronischer Datenspeicher und/oder ein Flashspeicher ausgebildet. Das hat den Vorteil, dass diese Komponenten üblicherweise von vornherein auf dem Gerät vorhanden sind und für eine operative Durchführung des Betriebs des Geräts ausgebildet sind. Zusätzlich können diese Komponenten im Sinne der Erfindung zum Ermitteln der Gültigkeit der Nutzungsberechtigung des computerimplementierten Produkts auf dem Gerät verwendet werden.

In einer weiteren Weiterbildung der Erfindung wird vor dem Ermitteln des zweiten Wertes der Variable ein Identifizieren einer Authentizität und/oder einer Integrität der Komponente durchgeführt. Dies hat den Vorteil, dass insbesondere ein Austausch und/oder eine Manipulation der Komponente erkannt werden kann. Der zweite Wert wird nur ermittelt oder nur für das Ermitteln der Gültigkeit der Nutzungsberechtigung verwendet, wenn er sich auf die erwartete ursprüngliche Komponente, an welcher der erste Wert ermittelt wurde, bezieht.

In einer weiteren Weiterbildung der Erfindung wird in das Ermitteln der Gültigkeit zusätzlich eine zweite Variable einer zweiten Komponente einbezogen. Dies hat den Vorteil, dass eine zweite Variable zur Verfügung steht und das Ermitteln der Gültigkeit, insbesondere basierend auf einer Schätzung der aktuellen Zeit, der Zeitspanne oder der Nutzungsdauer, mit einer höheren Genauigkeit oder einer höheren Konfidenz durchgeführt werden kann.

In einer weiteren Weiterbildung der Erfindung ist die zweite Komponente ausgebildet als:
- ein Secure Element wie z.B. ein Trusted Platform Module (TPM)
- eine spezielle Security-Hardware, insbesondere Dongle,
- ein zweiter elektronischer Datenspeicher und/oder
- ein zweiter Flashspeicher.
Dies hat den Vorteil, dass eine zweite Komponente zur Verfügung steht und für das Ermitteln der zweiten Variable herangezogen werden kann.

In einer weiteren Weiterbildung der Erfindung wird in das Ermitteln des Gültigkeitswerts ein Kalibrierungsvorgang und/oder ein Anlernvorgang einbezogen. So kann aufgrund der schweren Vorhersagbarkeit der Variable der Komponente vor Ermitteln des Gültigkeitswerts, insbesondere vor einer Festlegung von erlaubten Maximal-/Minimalwerten für den zweiten Wert, ein Kalibrierungsvorgang oder Anlernvorgang vorgeschaltet werden, um eine plausible Relation zwischen der Nutzungsdauer bzw. der Anzahl an Nutzungen und der Veränderung der Variable, insbesondere dem zweiten Wert, zu ermitteln.

In einer weiteren Weiterbildung der Erfindung hängt die Variable monoton ab von:
- einer Anzahl von Startvorgängen des Gerätes, insbesondere der S.M.A.R.T.-System (Self-Monitoring, Analysis and Reporting Technology) Parameter "Power Cycle Count",
- einer Anzahl von Herunterfahrvorgängen des Gerätes,
- einer Anzahl von Nutzungen des Gerätes, insbesondere S.M.A.R.T "Start Stop Count",
- einer Laufzeit des Gerätes, insbesondere S.M.A.R.T "Power On Hours",
- einer Anzahl von Startvorgängen des computerimplementierten Produkts,
- einer Anzahl von Beendigungsvorgängen des computerimplementierten Produkts,
- einer Anzahl von Nutzungen des computerimplementierten Produkts,
- einem auf der Komponente geschriebenen Datenvolumen,
- einem auf der Komponente gelesenen Datenvolumen und/oder
- einer Anzahl an fehlerhaften Speichereinheiten der Komponente.

In einer weiteren Weiterbildung der Erfindung wird in Abhängigkeit der Gültigkeit eine Aktion ausgelöst, wobei die Aktion insbesondere ausgebildet ist als:
- eine Warnmeldung,
- eine Warnmeldung, dass die Nutzungsberechtigung abgelaufen ist,
- eine Warnmeldung, dass die Nutzungsberechtigung zu einem gegebenen Zeitpunkt ablaufen wird,
- eine Warnmeldung, dass die Nutzungsberechtigung mit einer gegebenen Anzahl an weiteren Nutzungen ablaufen wird,
- eine Meldung, zu welchem Anteil ein Volumen der Nutzungsberechtigung bereits verbraucht wurde,
- ein Blockieren der Nutzbarkeit des computerimplementierten Produkts,
- ein Beschränken der Nutzbarkeit des computerimplementierten Produkts,
- eine Ausgabe eines Werbebanners,
- ein Senden einer Nachricht an den Herausgeber des computerimplementierten Produkts,
- ein Löschen der Nutzungsberechtigung und/oder
- eine Ermittlung eines nutzungsbasierten Betrags.

Im Sinne einer besseren Planbarkeit auf Seite des Lizenznehmers kann eine bestimmte Aktion schon vor Erreichen einer speziellen Ausprägung des zweiten Werts, insbesondere eines Grenzwerts des monotonen Zählers, ausgelöst werden. Insbesondere kann ein Warnhinweis ausgegeben werden, wenn ein bestimmter Schwellwert überschritten und die Nutzungsberechtigung, insbesondere Lizenz, damit in Kürze abzulaufen droht. Zur vereinfachten Einschätzung durch den Nutzer kann insbesondere auch die unter dem bisherigen Nutzungsverhalten verbleibende Restdauer der Nutzungsberechtigung angegeben werden.
Die Ermittlung des nutzungsbasierten Betrags hat den Vorteil, dass in einer Variante der Erfindung die Variable, insbesondere der monotone Zähler, nicht zur a-priori-Beschränkung der Nutzungsberechtigung, insbesondere der zeitlichen Nutzbarkeit bzw. der Anzahl der Nutzungsvorgänge, verwendet wird, sondern der zweite Wert, insbesondere der Endwert nach der Nutzung des computerimplementierten Produkts, insbesondere des Lizenzgegenstandes, durch den Lizenznehmer für ein nutzungsbasiertes Abrechnungsmodell herangezogen wird.

In einer weiteren Variante der Erfindung werden die Variablen, insbesondere monotone Zähler, genutzt, um die Korrektheit der Systemzeit (oder eines anderen, im nichtmanipulierten Zustand monoton steigenden/fallenden Wertes) zu verifizieren. Dies kann im Übrigen auch für gänzlich andere Anwendungsfälle als ein Lizenzierungsszenario vorteilhaft sein. In Bezug auf ein solches lässt sich z.B. ein zusätzlicher Schutz für einen an die Systemzeit gebundenen Lizenzierungsmechanismus wie folgt erreichen: Die beim Start der Nutzung des Lizenzgegenstandes vorliegende Systemzeit und die vorliegenden Stände der monotonen Zähler werden in einem Logfile abgelegt, zusammen mit einem Message Authentication Code (MAC) oder einer digitalen Signatur, die mit einem dem Anwender nicht zugänglichen kryptographischen Schlüssel bestimmt wurden. Bei der nächsten Nutzung des Lizenzgegenstandes wird der Inhalt des Logfiles (alte Systemzeit und alte Zählerstände) auf Integrität (MAC/Signatur) und gegen den Istzustand (neue Systemzeit und neue Zählerstände) geprüft. Eine klassische Replay-Attacke durch Überschreiben des Logfiles mit einem früheren Stand und Setzen der Systemzeit auf einen Wert kurz nach Erstellung desselben kann dann (anders als wenn das File nur eine authentisierte Systemzeit enthielte), erkannt werden, beispielsweise, weil die Veränderung eines monoton ansteigenden Zählers (Differenz zwischen Istzustand und Wert im File) viel größer ist, als durch die (durch Manipulation der Systemzeit verkleinerte) Differenz zwischen im File hinterlegter und aktueller Systemzeit plausibel bzw. überhaupt möglich wäre.

Weiterhin ist es möglich, eine Nutzungsinformation einer Software-basierten Funktionalität basierend auf dem ersten Wert und dem zweiten Wert, insbesondere den erfassten Alterungswerten der Komponenten, zu ermitteln und insbesondere für eine nutzungsabhängige Abrechnung zu verwenden, insbesondere für eine Plausibilisierung von explizit ermittelten Nutzungsdaten.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines computerimplementierten Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines computerimplementierten Verfahrens ausgeführt werden, wenn das Computerprogramm auf der Recheneinheit ausgeführt wird.

Die Erfindung bietet den Vorteil, dass Lizenzierungsmodelle mit zeitlich beschränkter Nutzung des Lizenzgegenstandes bzw. einer beschränkten Anzahl von Nutzungsvorgängen oder begrenzter Nutzungsdauer durch das Einbeziehen monotoner Zähler in ohnehin auf dem Gerät vorhandenen Komponenten besser gegen anwenderseitige Manipulationen zur Umgehung einer technischen Lizenzprüfung geschützt werden können.

Insbesondere setzt die Erfindung also nicht das Vorhandensein eines TPMs oder eines zusätzlichen Dongles voraus; trotzdem lässt sie sich durch solche als zusätzliche Quelle für monotone Zähler ergänzen. Dabei ist aufgrund der Kopplung an typische Nutzeraktionen (z.B. Ein-/Ausschalten bzw. Betriebszeit bei S.M.A.R.T.-Daten) der vorgeschlagenen Zähler weiterhin eine hohe Flexibilität der Lizenzmodelle gegeben, inklusive eines nutzungsbasierten Abrechnungsmodells (siehe entsprechende Variante). Unabhängig von Lizenzierungsszenarien ist die erfinderische Idee allgemein zur Prüfung der Systemzeit auf Manipulationen einsetzbar.

### Kurze Beschreibung der Zeichnungen

Die Besonderheiten und Vorteile der Erfindung werden aus den nachfolgenden Erläuterungen mehrerer Ausführungsbeispiele anhand der schematischen Zeichnungen ersichtlich.

Es zeigt:

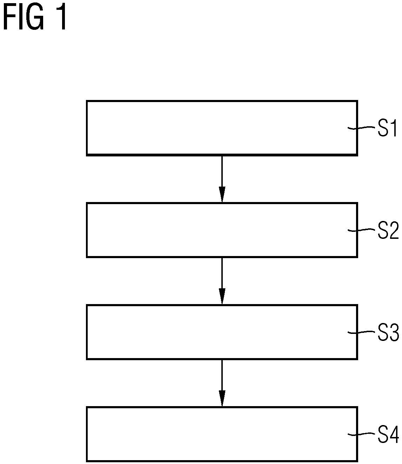

- Fig. 1: ein Ablaufdiagramm des erfindungsgemäßen Verfahrens.

### Detaillierte Beschreibung der Erfindung

Fig. 1 zeigt ein Verfahren zum Ermitteln einer Gültigkeit einer Nutzungsberechtigung eines computerimplementierten Produkts auf einem Gerät. Das Verfahren ist charakterisiert dadurch, dass das Gerät eine Komponente aufweist, eine Variable der Komponente von einem Nutzungsumfang der Komponente monoton abhängt, die Variable gegen Manipulation geschützt ist, die Komponente für eine erste Funktion ausgebildet ist, die erste Funktion eine operative Durchführung des Betriebs des Geräts ist und die Komponente zusätzlich für eine zweite Funktion, welche das Ermitteln der Gültigkeit ist, herangezogen wird.

Das Verfahren weist die folgenden Schritte auf:
- Schritt S1: Ermitteln eines ersten Werts der Variablen zu einem ersten Zeitpunkt,
- Schritt S2: Ermitteln eines Gültigkeitswerts, wobei in den Gültigkeitswert der erste Wert einfließt oder diesem entspricht,
- Schritt S3: Ermitteln eines zweiten Wertes der Variable zu einem zweiten Zeitpunkt, wobei der zweite Zeitpunkt nach dem ersten Zeitpunkt liegt, und
- Schritt S4: Ermitteln der Gültigkeit der Nutzungsberechtigung basierend auf dem zweiten Wert in Relation zu dem Gültigkeitswert.

Ein Aspekt der Erfindung besteht darin, die Gültigkeit einer Nutzungsberechtigung eines computerimplementierten Produkts durch eine Variable einer Komponente zu prüfen, wobei die Komponente von Grund auf Bestanteil des Gerätes, auf dem das computerimplementierte Produkt läuft, ist und wobei die Komponente nicht zu dem speziellen Zweck, die Gültigkeit der Nutzungsberechtigung des computerimplementierten Produkts zu prüfen, Bestandteil des Gerätes ist.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Ermitteln einer Gültigkeit einer Nutzungsberechtigung eines computerimplementierten Produkts auf einem Gerät, wobei das Gerät eine Komponente aufweist,
wobei eine Variable der Komponente von einem Nutzungsumfang der Komponente monoton abhängt,
wobei die Variable gegen Manipulation geschützt ist,
wobei die Komponente für eine erste Funktion ausgebildet ist, wobei die erste Funktion eine operative Durchführung des Betriebs des Geräts ist und
wobei die Komponente zusätzlich für eine zweite Funktion, welche das Ermitteln der Gültigkeit ist, herangezogen wird, mit den Schritten:
- Ermitteln (S1) eines ersten Werts der Variablen zu einem ersten Zeitpunkt,
- Ermitteln (S2) eines Gültigkeitswerts, wobei in den Gültigkeitswert der erste Wert einfließt oder diesem entspricht,
- Ermitteln (S3) eines zweiten Wertes der Variable zu einem zweiten Zeitpunkt, wobei der zweite Zeitpunkt nach dem ersten Zeitpunkt liegt, und
- Ermitteln (S4) der Gültigkeit der Nutzungsberechtigung basierend auf dem zweiten Wert in Relation zu dem Gültigkeitswert.

2. Verfahren nach Anspruch 1,
wobei die Nutzungsberechtigung als:
- ein digiatles Zertifikat,
- ein Lizenzzertifikat,
- eine Zugriffsberechtigung, insbesondere eine "Capability"
- ein kryptographischer Schlüssel und/oder
- eine Zugangsberechtigung
ausgebildet ist.

3. Verfahren nach einem der vorhergehenden Ansprüche,
wobei das computerimplementierte Produkt als:
- computerbasierte Dienstleistung,
- Softwarelösung,
- Internetplattform,
- Cloudkapazität,
- Cloudumgebung,
- Containerlaufzeitumgebung und/oder
- lesbare Inhalte
ausgebildet ist.

4. Verfahren nach einem der vorhergehenden Ansprüche,
wobei für das Ermitteln der Gültigkeit:
- eine formelbasierte Berechnung
- eine Berechnung einer Differenz des zweiten Wertes und des ersten Wertes,
- eine Ableitungskette,
- eine Hashkette und/oder
- ein künstliches neuronales Netz
einbezogen wird.

5. Verfahren nach einem der vorhergehenden Ansprüche,
wobei ein zu der Gültigkeit zugehöriges Konfidenzintervall ermittelt wird.

6. Verfahren nach einem der vorhergehenden Ansprüche,
wobei die Komponente ausgebildet ist als:
- ein elektronischer Datenspeicher und/oder
- ein Flashspeicher.

7. Verfahren nach einem der vorhergehenden Ansprüche,
wobei vor dem Ermitteln des zweiten Wertes der Variable ein Identifizieren einer Authentizität und/oder einer Integrität der Komponente durchgeführt wird.

8. Verfahren nach einem der vorhergehenden Ansprüche,
wobei in das Ermitteln der Gültigkeit zusätzlich eine zweite Variable einer zweiten Komponente einbezogen wird,
wobei die zweite Komponente ausgebildet ist als:
- ein Secure Element, wie insbesondere ein Trusted Platform Module (TPM),
- eine spezielle Security-Hardware, insbesondere Dongle,
- ein zweiter elektronischer Datenspeicher und/oder
- ein zweiter Flashspeicher.

9. Verfahren nach einem der vorhergehenden Ansprüche,
wobei die Komponente nicht als ein spezielles Hardwaresicherheitsmodul, insbesondere nicht als Hardware-Dongle und nicht als Trusted Platform Modul, ausgebildet ist.

10. Verfahren nach einem der vorhergehenden Ansprüche,
wobei der Gültigkeitswert der Nutzungsberechtigung:
- mit der Nutzungsberechtigung und/oder
- mit dem computerimplementierten Produkt
gespeichert wird.

11. Verfahren nach einem der vorhergehenden Ansprüche,
wobei in das Ermitteln des Gültigkeitswerts:
- ein Kalibrierungsvorgang und/oder
- ein Anlernvorgang
einbezogen wird.

12. Verfahren nach einem der vorhergehenden Ansprüche,
wobei die Variable monoton abhängt von:
- einer Anzahl von Startvorgängen des Gerätes,
- einer Anzahl von Herunterfahrvorgängen des Gerätes,
- einer Anzahl von Nutzungen des Gerätes,
- einer Laufzeit des Gerätes,
- einer Anzahl von Startvorgängen des computerimplementierten Produkts,
- einer Anzahl von Beendigungsvorgängen des computerimplementierten Produkts,
- einer Anzahl von Nutzungen des computerimplementierten Produkts,
- einem auf der Komponente geschriebenen Datenvolumen,
- einem auf der Komponente gelesenen Datenvolumen und/oder
- einer Anzahl an fehlerhaften Speichereinheiten der Komponente.

13. Verfahren nach einem der vorhergehenden Ansprüche,
wobei in Abhängigkeit der Gültigkeit eine Aktion ausgelöst wird, wobei die Aktion insbesondere ausgebildet ist als:
- eine Warnmeldung,
- eine Warnmeldung, dass die Nutzungsberechtigung abgelaufen ist,
- eine Warnmeldung, dass die Nutzungsberechtigung zu einem gegebenen Zeitpunkt ablaufen wird,
- eine Warnmeldung, dass die Nutzungsberechtigung mit einer gegebenen Anzahl an weiteren Nutzungen ablaufen wird,
- eine Meldung, zu welchem Anteil ein Volumen der Nutzungsberechtigung bereits verbraucht wurde,
- ein Blockieren der Nutzbarkeit des computerimplementierten Produkts,
- ein Beschränken der Nutzbarkeit des computerimplementierten Produkts,
- eine Ausgabe eines Werbebanners,
- ein Senden einer Nachricht an den Herausgeber des computerimplementierten Produkts,
- ein Löschen der Nutzungsberechtigung und/oder
- eine Ermittlung eines nutzungsbasierten Betrags.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
